(19) Europäisches Patentamt
European Patent Office
Office européen des brevets

(11) **EP 3 559 072 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **17826240.8**

(22) Anmeldetag: **22.12.2017**

(51) Int Cl.:
*C08G 18/66* (2006.01)  *C08G 18/75* (2006.01)
*C08G 18/76* (2006.01)  *C08G 18/32* (2006.01)
*C08G 18/42* (2006.01)

(86) Internationale Anmeldenummer:
**PCT/EP2017/084423**

(87) Internationale Veröffentlichungsnummer:
**WO 2018/115460 (28.06.2018 Gazette 2018/26)**

(54) **THERMOPLASTISCHES POLYURETHAN MIT HOHER WEITERREISSFESTIGKEIT**

THERMOPLASTIC POLYURETHANE WITH HIGH RESISTANCE TO FURTHER TEARING

POLYURÉTHANE THERMOPLASTIQUE PRÉSENTANT UNE RÉSISTANCE À LA DÉCHIRURE ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016 EP 16206700**

(43) Veröffentlichungstag der Anmeldung:
**30.10.2019 Patentblatt 2019/44**

(73) Patentinhaber: **BASF SE**
**67056 Ludwigshafen am Rhein (DE)**

(72) Erfinder:
• **RICHTER, Sebastian**
**49448 Lemfoerde (DE)**
• **TOMOVIC, Zeljko**
**49448 Lemfoerde (DE)**
• **COHEN, Kathrin**
**67056 Ludwigshafen am Rhein (DE)**

(74) Vertreter: **BASF IP Association**
**BASF SE**
**GBI-C006**
**67056 Ludwigshafen (DE)**

(56) Entgegenhaltungen:
**US-A- 4 186 257**

**Beschreibung**

Die vorliegende Erfindung betrifft ein thermoplastisches Polyurethan, erhältlich oder erhalten durch Umsetzung einer Polyisocyanatzusammensetzung, eines Kettenverlängerers, und einer Polyolzusammensetzung, wobei die Polyolzusammensetzung mindestens ein Polyol (P1) umfasst, das ein Molekulargewicht Mw im Bereich von 1500 bis 2500 g/Mol aufweist und mindestens einen aromatischen Polyester-Block (B1) aufweist. Weiterhin betrifft die vorliegende Erfindung ein Verfahren zur Herstellung eines Formkörpers umfassend ein derartiges thermoplastisches Polyurethan sowie Formkörper, erhältlich oder erhalten gemäß einem erfindungsgemäßen Verfahren.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

Für viele Anwendungen ist insbesondere eine hohe Weiterreißfestigkeit erforderlich, wobei gleichzeitig eine gute Kälteflexibilität bei ansonsten guten mechanischen Eigenschaften der Materialien erforderlich ist.

US 5496496 offenbart ein Verfahren zur Herstellung eines Polyurethanelastomers, umfassend die Umsetzung eines Polyisocyanats und eines Polyols oder ein Isocyanat-terminierten Prepolymers, erhältlich durch Umsetzung des Polyisocyanats mit dem Polyol und weiter mit einer speziellen Polyolmischung enthaltend ein Diol und ein Triol mit einem Hydroxyläquivalentgewicht von 60 bis 500. Dabei werden Polyurethanelastomere mit verbesserter Zugfestigkeit, Reißfestigkeit und ansonsten guten mechanischen Eigenschaften erhalten.

US 4062825 offenbart eine Polyurethanzusammensetzung mit einer hohen Reißfestigkeit, die durch homogenes Vermischen von 20 bis 50 Gewichtsteile feinverteilter sauren Siliciumdioxidteilchen, 100 Gewichtsteile Isocyanat-terminierten Präpolymers und entsprechender Teile weiterer Zusatzstoffe, sowie Härten der Mischung erhalten wird. Dabei ist das Verhältnis (l/d) des mittleren Ketten Abstands (l) zwischen benachbarten Vernetzungspunkten der ausgehärteten Polyurethanketten zur durchschnittlichen Größe (d) der fein verteilten Partikel Siliciumdioxid im Bereich von 2,5 bis 20.

US 4202950 betrifft Polyurethanzusammensetzungen mit verbesserter Zugfestigkeit und Reißfestigkeit, die durch Pfropfpolymerisation eines ethylenisch ungesättigten Monomers und anschließende Umsetzen des resultierenden Pfropfcopolymers mit einem polyfunktionellen organischen Isocyanat hergestellt werden. Herkömmliche Katalysatoren und Polymerisationsverfahren werden eingesetzt.

EP 2 687 552 A1 offenbart Nanophasen-Polyharnstoff-Teilchen oder eine Dispersion von Polyharnstoff-Teilchen, die geeignet ist, die mechanischen Eigenschaften eines Polyurethan-Materials zu verbessern. US 4186257 offenbart die Herstellung von thermoplastischen Polyurethanen, hergestellt durch Reaktion eines hochmolekularen Polyols, erhalten durch Kondensation von Terephthal/Isophthalsäureester und Alkylenglykolen mit höhermolekularen Polyolen, mit einem Polyisocyanat und einem optionalen Kettenverlängerer. Der Anteil des aromatischen Blocksegments im hochmolekularen Polyol ist dabei 40 bis 80 gew.-%. Die TPUs zeigen gute mechanische Eigenschaften auch bei niedrigen Temperaturen.

Ausgehend vom Stand der Technik lag eine der vorliegenden Erfindung zugrundeliegende Aufgabe darin, ein thermoplastisches Polyurethan bereitzustellen, dass neben einer hohen Weiterreißfestigkeit auch eine Glasübergangstemperatur unter 5°C aufweist. Eine weitere Aufgabe der vorliegenden Erfindung lag darin, ein thermoplastisches Polyurethan mit einer hohen Weiterreißfestigkeit und einer Glasübergangstemperatur unter 5°C oder sogar unter 0°C bereitzustellen, das einfach und kostengünstig in einem one-shot Verfahren herzustellen ist.

Erfindungsgemäß wird diese Aufgabe gelöst durch ein thermoplastisches Polyurethan, erhältlich oder erhalten durch Umsetzung von mindestens den Komponenten (i) bis (iii):

> (i) eine Polyisocyanatzusammensetzung,
> (ii) mindestens ein Kettenverlängerer, und
> (iii) mindestens eine Polyolzusammensetzung,

wobei die Polyolzusammensetzung mindestens ein Polyol (P1) umfasst, das ein Molekulargewicht Mw im Bereich von 1500 bis 2500 g/Mol aufweist und mindestens einen aromatischen Polyester-Block (B1) aufweist.

Erfindungsgemäß weist das Polyol (P1) ein Molekulargewicht Mw im Bereich von 1500 bis 2500 g/Mol auf. Weiterhin weist das Polyol (P1) einen aromatischen Polyester-Block (B1) auf. Darunter wird im Rahmen der vorliegenden Erfindung verstanden, dass der aromatische Polyester-Block (B1) ein Polyester aus einer aromatischen Dicarbonsäure und einem aliphatischen Diol sein kann oder ein Polyester aus einer aliphatischen Dicarbonsäure und einem aromatischen Diol. Vorzugsweise ist der aromatische Polyester-Block (B1) im Rahmen der vorliegenden Erfindung ein Polyester aus einer aromatischen Dicarbonsäure und einem aliphatischen Diol. Geeignete aromatische Dicarbonsäuren sind dabei beispielsweise Terephthalsäure, Isophthalsäure oder Phthalsäure, bevorzugt Terephthalsäure. Demgemäß sind geeignete Polyole (P1) im Rahmen der vorliegenden Erfindung solche, die beispielsweise mindestens einen Polyethylenterephthalat-Block oder mindestens einen Polybutylenterephthalat-Block aufweisen, wobei die Anzahl der Wiederholungseinheiten der Aromaten mindestens 2 in Reihe ist. Vorzugsweise wird der aromatische Polyester-Block (B1) in einem gesonderten Schritt vor der weiteren Umsetzung zu Polyol (P1) hergestellt, um eine ausreichende Blocklänge der Wiederholungseinheiten der Aromaten zu gewährleisten.

Erfindungsgemäß kann das thermoplastische Polyurethan insbesondere ein kompaktes thermoplastisches Polyurethan sein. Demgemäß betrifft die vorliegende Erfindung gemäß einer weiteren Ausführungsform ein thermoplastisches Polyurethan wie zuvor beschrieben, wobei das thermoplastische Polyurethan ein kompaktes thermoplastisches Polyurethan ist.

Gemäß einer weiteren Ausführungsform betrifft die vorliegende Erfindung demgemäß ein thermoplastisches Polyurethan wie zuvor beschrieben, wobei der aromatische Polyester-Block (B1) ein Polyester aus einer aromatischen Dicarbonsäure und einem aliphatischen Diol ist. Gemäß einer weiteren Ausführungsform betrifft die vorliegende Erfindung auch ein thermoplastisches Polyurethan wie zuvor beschrieben, wobei der aromatische Polyester-Block (B1) ein Polyethylenterephthalat-Block oder ein Polybutylenterephthalat-Block ist. Gemäß einer weiteren bevorzugten Ausführungsform betrifft die vorliegende Erfindung weiterhin ein thermoplastisches Polyurethan wie zuvor beschrieben, wobei der aromatische Polyester-Block (B1) ein Polyethylenterephthalat-Block ist.

Überraschenderweise wurde gefunden, dass durch die Verwendung von Polyolen (P1) mit einem Molekulargewicht Mw im Bereich von 1500 bis 2500 g/Mol, die mindestens einen aromatischen Polyester-Block (B1) aufweisen, thermoplastische Polyurethane erhalten werden, die eine sehr gute Weiterreißfestigkeit und eine niedrige Glasübergangstemperatur aufweisen.

Im Rahmen der vorliegenden Erfindung sind insbesondere solche Polyole (P1) geeignet, die auf aromatischen Polyestern basieren, wie Polybutylenterephthalat (PBT) oder Polyethylenterephthalat (PET). Vorzugsweise wird dabei zur Herstellung des Polyols (P1) der aromatische Polyester mit Dicarbonsäuren und Diolen zu gemischten aromatisch / aliphatischen Polyesterdiolen umgesetzt. Beispielsweise ist es im Rahmen der vorliegenden Erfindung möglich, den aromatischen Polyester in fester oder flüssiger Form mit Dicarbonsäuren und Diolen umzusetzen. Erfindungsgemäß weist dabei üblicherweise der eingesetzte aromatische Polyester ein höheres Molekulargewicht auf als die im Polyol (P1) enthaltenen Blöcke (B1).

Erfindungsgemäß geeignete Polyesterpolyole (P1) enthalten typischerweise 10 bis 50 Gew.-%, vorzugsweise 20 bis 40 Gew.-%, besonders bevorzugt 25 bis 35 Gew.-% der aromatischen Polyester-Blöcke (B1), jeweils bezogen auf das gesamte Polyesterpolyol (P1). Gemäß einer weiteren Ausführungsform betrifft die vorliegende Erfindung demgemäß ein thermoplastisches Polyurethan wie zuvor beschrieben, wobei das Polyol (P1) 10 bis 50 Gew.-% der aromatischen Polyester-Blöcke (B1) aufweist, bezogen auf das gesamte Polyesterpolyol (P1).

Erfindungsgemäß weist das Polyol (P1) ein Molekulargewicht Mw im Bereich von 1500 bis 2500, bevorzugt im Bereich von 1700 bis 2300, besonders bevorzugt im Bereich von 2000 bis 2300, ganz besonders bevorzugt im Bereich von 2150 bis 2250 g/Mol auf. Gemäß einer weiteren Ausführungsform betrifft die vorliegende Erfindung demgemäß ein thermoplastisches Polyurethan wie zuvor beschrieben, wobei das Polyol (P1) ein Molekulargewicht Mw im Bereich von 1700 bis 2300 g/Mol aufweist.

Zur Berechnung der Molekulargewicht (Mw) wird folgende Formel verwendet, wobei es sich bei z um die Funktionalität des Polyesterpolyols handelt und z = 2 ist:

$$Mw = 1000 \text{ mg/g} \cdot [(z \cdot 56{,}106 \text{ g/Mol})/ (OHZ \text{ [mg/g]})]$$

Bei der Herstellung der Polyole (P1) werden vorzugsweise aromatische Polyester wie Polybutylenterephthalat (PBT) oder Polyethylenterephthalat (PET) eingesetzt. Polyethylenterephthalat ist ein durch Polykondensation hergestellter thermoplastischer Kunststoff. Die Qualität des PET, seine physikalischen Eigenschaften, wie Zähigkeit oder Widerstandskraft, sind abhängig von der Kettenlänge. Ältere PET-Syntheseverfahren beruhen auf der Umesterung von Terephthalsäure-Dimethylester mit Ethylenglycol. Heute erfolgt die PET Synthese fast ausschließlich nur noch durch direkte Veresterung der Terephthalsäure mit Ethylenglycol. Auf gleiche Weise kann Terephthalsäure auch mit 1,4-Butandiol zu Polybutylenterephthalat (PBT) umgesetzt werden. Dieser ebenfalls thermoplastische Kunststoff ist unter Marken, wie CRASTIN® (Du-Pont), POCAN® (Lanxcess), ULTRADUR® (BASF) oder ENDURAN® und VESTODUR® (SABIC IP) erhältlich. Seine chemischen und physikalisch-technischen Eigenschaften entsprechen weitgehend denen von PET.

Erfindungsgemäß können auch aromatische Polyester wie Polybutylenterephthalat (PBT) oder Polyethylenterephthalat (PET) eingesetzt werden, die aus Recyclingprozessen gewonnen werden. So kann beispielsweise Polyethylenterephthalat in Form von Flocken eingesetzt werden, das aus Kunststoff-Recyclingprozessen erhalten wird. Derartige Materialien haben typischerweise Molekulargewichte von etwa 12000 g/Mol.

Erfindungsgemäß können geeignete Polyole (P1) auch unter Verwendung von aromatischen Polyestern wie Polybutylenterephthalat oder Polyethylenterephthalat mit höherem Molekulargewicht und Diolen durch Umesterung erhalten werden. Geeignete Reaktionsbedingungen sind dem Fachmann an sich bekannt.

Weiterhin werden bei der Herstellung der Polyole (P1) Diole mit 2 bis 10 Kohlenstoffatomen, beispielsweise Ethandiol, Propandiol, Butandiol, Pentandiol, Hexandiol oder Di- oder Triethylenglykol, weiter bevorzugt Butandiol, Hexandiol oder Diethylenglykol, insbesondere Diethylenglykol oder Mischungen daraus eingesetzt. Auch kurze Polyetherdiole, wie beispielsweise PTHF250 oder PTHF 650 oder ein kurzkettiges Polypropylenglykol wie ein PPG 500 können eingesetzt werden. Als Dicarbonsäuren können beispielsweise lineare oder verzweigtkettige Disäuren mit vier bis 12 Kohlenstoffatomen oder Mischungen daraus eingesetzt werden. Vorzugsweise wird Adipinsäure, Bernsteinsäure, Glutarsäure oder Sebazinsäure oder eine Mischung der genannten Säuren eingesetzt. Besonders bevorzugt ist im Rahmen der vorliegenden Erfindung Adipinsäure. Erfindungsgemäß können bei der Herstellung der Polyole (P1) auch weitere Polyesterdiole als Einsatzstoffe eingesetzt werden, beispielsweise Butandioladipat oder Ethylenadipat.

Es ist im Rahmen der vorliegenden Erfindung wesentlich, dass bei der Herstellung des thermoplastischen Polyurethans mindestens ein Kettenverlängerer und die Polyolzusammensetzung wie zuvor beschrieben eingesetzt werden.

Erfindungsgemäß kann ein Kettenverlängerer eingesetzt werden, es können jedoch auch Mischungen verschiedener Kettenverlängerer eingesetzt werden.

Als Kettenverlängerer können im Rahmen der vorliegenden Erfindung beispielsweise Verbindungen mit Hydroxyl- oder Amino-Gruppen eingesetzt werden, insbesondere mit 2 Hydroxyl- oder Amino-Gruppen. Erfindungsgemäß ist es jedoch auch möglich, dass Gemische verschiedener Verbindungen als Kettenverlängerer eingesetzt werden. Dabei ist erfindungsgemäß die mittlere Funktionalität der Mischung 2.

Erfindungsgemäß bevorzugt werden als Kettenverlängerer Verbindungen mit Hydroxylgruppen eingesetzt, insbesondere Diole. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol. Auch aromatische Verbindungen wie Hydroxychinon(bis(2-hydroxyethyl))ether können eingesetzt werden.

Erfindungsgemäß können auch Verbindungen mit Amino-Gruppen eingesetzt werden, beispielsweise Diamine. Ebenso können Gemische von Diolen und Diaminen eingesetzt werden.

Bevorzugt ist der Kettenverlängerer ein Diol mit einem Molekulargewicht Mw < 220 g/mol. Erfindungsgemäß ist es möglich, dass lediglich ein Diol mit einem Molekulargewicht Mw < 220 g/mol zur Herstellung des transparenten, thermoplastischen Polyurethans eingesetzt wird.

Gemäß einer weiteren Ausführungsform werden mehr als ein Diol als Kettenverlängerer eingesetzt. Es können somit auch Mischungen von Kettenverlängerern eingesetzt werden, wobei mindestens ein Diol ein Molekulargewicht Mw < 220 g/mol aufweist. Werden mehr als ein Kettenverlängerer eingesetzt, so kann das zweite oder weitere Kettenverlängerer auch ein Molekulargewicht ≥ 220 g/mol aufweisen.

Gemäß einer weiteren Ausführungsform ist der Kettenverlängerer ausgewählt aus der Gruppe bestehend aus 1,4-Butandiol und 1,6-Hexandiol.

Gemäß einer weiteren Ausführungsform betrifft die vorliegende Erfindung demgemäß ein thermoplastisches Polyurethan wie zuvor beschrieben, wobei der gemäß (ii) eingesetzte Kettenverlängerer ein Diol mit einem Molekulargewicht Mw < 220 g/mol ist.

Der Kettenverlängerer, insbesondere das Diol mit einem Molekulargewicht Mw < 220 g/mol, wird vorzugsweise in einem molaren Verhältnis im Bereich von 40:1 bis 1:10 zu dem Polyol (P1) eingesetzt. Bevorzugt werden der Kettenverlängerer und das Polyol (P1) in einem molaren Verhältnis im Bereich von 20:1 bis 1:9 eingesetzt, weiter bevorzugt im Bereich von 10:1 bis 1:8, beispielsweise im Bereich von 5:1 bis 1:5, oder auch im Bereich von 4:1 bis 1:4, weiter bevorzugt im Bereich von 3:1 bis 1:2.

Gemäß einer weiteren Ausführungsform betrifft die vorliegende Erfindung demgemäß ein thermoplastisches Polyurethan wie zuvor beschrieben, wobei der gemäß (ii) eingesetzte Kettenverlängerer und das in der Polyolzusammensetzung enthaltene Polyol (P1) in einem molaren Verhältnis von 40 zu 1 bis 1 zu 10 eingesetzt werden.

Erfindungsgemäß kann die Polyolzusammensetzung neben dem mindestens einen Polyol (P1) weitere Polyole enthalten. Dementsprechend können im Rahmen der vorliegenden Erfindung auch mindestens ein Kettenverlängerer und eine Polyolzusammensetzung umfassend mindestens ein Polyol (P1) wie zuvor beschrieben und mindestens ein weiteres Polyol eingesetzt werden.

Vorzugsweise weisen die weiteren Polyole keinen Polyethylenterephthalat-Block auf. Gemäß einer weiteren Ausführungsform betrifft die vorliegende Erfindung demgemäß ein thermoplastisches Polyurethan wie zuvor beschrieben, wobei die Polyolzusammensetzung ein weiteres Polyol ausgewählt aus der Gruppe bestehend aus Polyetherolen, Polyesterolen, Polycarbonatalkoholen und Hybridpolyolen umfasst.

Als höhermolekulare Verbindungen mit gegenüber Isocyanaten reaktiven Wasserstoffatomen können die allgemein bekannten Polyole mit gegenüber Isocyanaten reaktiven Verbindungen eingesetzt werden.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Besonders bevorzugt sind Polyesterpolyole. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegen vorzugsweise zwischen $0,5x10^3$g/mol und $8 x10^3$ g/mol, bevorzugt zwischen $0,6 x10^3$ g/mol und $5 x10^3$ g/mol, insbesondere zwischen $0,8 x10^3$ g/mol und $3 x10^3$ g/mol.

Bevorzugt besitzen sie eine mittlere Funktionalität gegenüber Isocyanaten von 1,8 bis 2,3, besonders bevorzugt 1,9 bis 2,2, insbesondere 2.

Als Polyesterole können Polyesterole auf Basis von Disäuren und Diolen eingesetzt werden. Als Diole werden vorzugsweise Diole mit 2 bis 10 Kohlenstoffatomen, beispielsweise Ethandiol, Propandiol, Butandiol, Pentandiol, Hexandiol oder Di- oder Triethylenglykol, insbesondere 1,4-Butandiol oder Mischungen daraus eingesetzt. Als Disäuren können alle bekannten Disäuren eingesetzt werden, beispielsweise lineare oder verzweigtkettige Disäuren mit vier bis 12 Kohlenstoffatomen oder Mischungen daraus. Vorzugsweise wird Adipinsäure als Disäure eingesetzt.

Bevorzugte Polyetherole sind erfindungsgemäß Polyethylenglykole, Polypropylenglykole und Polytetrahydrofurane.

Gemäß einer besonders bevorzugten Ausführungsform ist das Polyol ein Polytetrahydrofuran (PTHF) mit einem Molekulargewicht im Mw Bereich von 600 g/mol bis 2500 g/mol.

Erfindungsgemäß sind neben PTHF diverse weitere Polyether geeignet, aber auch Polyester, Blockcopolymere sowie Hybrid Polyole wie z.B. Poly(ester/amid) verwendbar.

Bevorzugt haben die eingesetzten Polyole eine mittlere Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Das zusätzliche Polyol wird vorzugsweise in einem molaren Verhältnis im Bereich von 10:1 bis 1:10 zu dem Polyol (P1) eingesetzt wird. In weiter bevorzugten Ausführungsformen werden das weitere Polyol und das Polyol (P1) in einem molaren Verhältnis im Bereich von 9:1 bis 1:9 eingesetzt, weiter bevorzugt im Bereich von 5:1 bis 1:5.

Erfindungsgemäß wird mindestens ein Polyisocyanat eingesetzt. Erfindungsgemäß können auch Mischungen aus zwei oder mehr Polyisocyanaten eingesetzt werden.

Bevorzugte Polyisocyanate sind im Rahmen der vorliegenden Erfindung Diisocyanate, insbesondere aliphatische oder aromatische Diisocyanate, weiter bevorzugt aromatische Diisocyanate.

Gemäß einer weiteren Ausführungsform betrifft die vorliegende Erfindung demgemäß ein thermoplastisches Polyurethan wie zuvor beschrieben, wobei das Polyisocyanat ein aliphatisches oder aromatisches Diisocyanat ist.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'-und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Demgemäß betrifft die vorliegende Erfindung gemäß einer weiteren Ausführungsform ein wie zuvor beschriebenes Verfahren, wobei das Polyisocyanat ausgewählt ist aus der Gruppe bestehend aus 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan (IPDI) oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethan-diisocyanat und/oder Phenylendiisocyanat.

Im Rahmen der vorliegenden Erfindung besonders bevorzugt als Isocyanat sind 2,2'-, 2,4'-und/oder 4,4'-Diphenylmethandiisocyanat (MDI) und deren Mischungen.

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurete der vorgenannten Diisocyanate, ferner Oligomere, die durch gezielte Umsetzung von semiblockierten Diisocyanaten mit Polyolen, die im Mittel mehr als 2 und vorzugsweise 3 oder mehr Hydroxy-Gruppen aufweisen, erhältlich sind.

Gemäß einer weiteren Ausführungsform betrifft die vorliegende Erfindung ein wie zuvor beschriebenes Verfahren, wobei das Polyisocyanat ein aliphatisches Diisocyanat ist.

Erfindungsgemäß kann das Polyisocyanat in reiner Form oder in Form einer Zusammensetzung enthaltend das Polyisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß können bei der Umsetzung von dem mindestens einen aliphatischen Polyisocyanat, dem mindestens einen Kettenverlängerer, und der mindestens einen Polyolzusammensetzung weitere Einsatzstoffe zugesetzt werden, beispielsweise Katalysatoren oder Hilfs- und Zusatzstoffe.

Geeignete Hilfs- und Zusatzstoffe sind dem Fachmann an sich bekannt. Genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Vorzugsweise wird erfindungsgemäß weiterhin ein Weichmacher eingesetzt.

Als Weichmacher können alle für die Verwendung in TPU bekannten Weichmacher eingesetzt werden. Diese umfassen beispielsweise Verbindungen, die mindestens eine phenolische Gruppe enthalten. Solche Verbindungen sind in EP 1 529 814 A2 beschrieben. Weiter können beispielsweise auch Polyester mit einem Molekulargewicht von ca. 100 bis 1500 g/mol auf Basis von Dicarbonsäuren, Benzoesäure und mindestens einem Di- oder Triol, vorzugsweise einem Diol eingesetzt werden. Als Disäurekomponente werden vorzugsweise Bernsteinsäure, Glutarsäure, Adipinsäure, Korksäure, Azelainsäure, Dekandicarbonsäure, Maleinsäure, Fumarsäure, Phthalsäure, Isophthalsäure und/oder Terephthalsäure und als Diol werden vorzugsweise Ethan-1,2-diol, Diethylenglykol, Propan-1,2-diol, Propan-1, 3-diol, Dipropylenglykol, Butan-1,4-diol, Pentan-1, 5-diol und/oder Hexan-1,6-diol eingesetzt. Dabei beträgt das Verhältnis von Dicarbonsäure zu Benzoesäure vorzugsweise 1 : 10 bis 10 : 1. Solche Weichmacher sind beispielsweise in EP 1 556 433 A1 näher beschrieben. Besonders bevorzugt sind auch Weichmacher auf Basis von Citronensäureestern, insbesondere Citronensäuretriethylester, Citronensäuretriacetyltriethylester, Citronensäuretri(n-butyl)ester, Citronensäureacetyltri(n-butyl)ester und Citronensäureacetyltri(2-ethylhexyl)ester. Weitere bevorzugte Weichmacher sind Triacetin, 1,2-Cyclohexandicarbonsäurediisononylester, 2,2,4-Trimethyl-1,3-pentanediol diisobutyrat, Tri-2-Ethylhexyltrimellitat, Dibutoxyethylphthalate, Mischung aus (C10-C21)Alkansulfonsäurephenylester, Dipropylenglykoldibenzoat, Tri-2-ethylhexyl-trimellitat, N-Dodecyl-2-pyrrolidon, Isodecylbenzoat, Mischung aus Diphenylkresylphosphat 42-47%, Triphenylphosphat 20-24%, Bis-(methylphenyl)phenylphosphat 20-24% und Trikresylphosphat 4-6%, sowie Diethylhexyladipat, Aliphatischer Fettsäureester, Triethylenglykol-di-(2-ethylhexanoat) und Dioctylterephthalat.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Zinn-II-isooctoat, Zinndioctoat, Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Titansäureester, Bismutverbindungen, wie Bismutalkylverbindungen, bevorzugt Bismutneodecanoat oder ähnliche, oder Eisenverbindungen, bevorzugt Eisen-(III)-acetylacetonat.

Gemäß einer bevorzugten Ausführungsform werden die Katalysatoren ausgewählt aus Zinnverbindungen und Bismutverbindungen, weiter bevorzugt Zinnalkylverbindungen oder Bismutalkylverbindungen. Besonders geeignet sind die Zinn-II-isooctoat und Bismutneodecanoat.

Die Katalysatoren werden üblicherweise in Mengen von 3 ppm bis 2000 ppm, bevorzugt 10 ppm bis 1000 ppm, weiter bevorzugt 20 ppm bis 500 ppm und am meisten bevorzugt von 30 ppm bis 300 ppm eingesetzt.

Gemäß einem weiteren Aspekt betrifft die vorliegende Erfindung auch ein Verfahren zur Herstellung eines Formkörpers (FK) umfassend die folgenden Schritte:

(a) Herstellung eines thermoplastischen Polyurethans umfassend die Umsetzung

(i) mindestens einer Polyisocyanatzusammensetzung,
(ii) mindestens eines Kettenverlängerers, und

(iii) mindestens einer Polyolzusammensetzung,

wobei die Polyolzusammensetzung mindestens ein Polyol (P1) umfasst, das ein Molekulargewicht Mw im Bereich von 1500 bis 2500 g/Mol aufweist und mindestens einen aromatischen Polyester-Block (B1) aufweist;

(b) Herstellung eines Formkörpers (FK) aus dem thermoplastischen Polyurethan.

Das erfindungsgemäße Verfahren umfasst die Schritte (a) und (b). Dabei wird zunächst gemäß Schritt (a) ein thermoplastisches Polyurethan durch Umsetzung mindestens einer Polyisocyanatzusammensetzung, mindestens eines Kettenverlängerers und mindestens einer Polyolzusammensetzung hergestellt. Dabei umfasst die Polyolzusammensetzung erfindungsgemäß mindestens ein Polyol (P1), das ein Molekulargewicht Mw im Bereich von 1500 bis 2500 g/Mol aufweist und das mindestens einen aromatischen Polyester-Block (B1) wie zuvor definiert aufweist, insbesondere einen Polyethylenterephthalat-Block.

Gemäß Schritt (b) wird aus dem gemäß Schritt (a) erhaltenen thermoplastischen Polyurethan ein Formkörper (FK) hergestellt. Der Formkörper (FK) kann dabei im Rahmen der vorliegenden Erfindung beispielsweise auch eine Folie sein. Dabei kann die Herstellung des Formkörpers (FK) im Rahmen der vorliegenden Erfindung auf alle üblichen Arten erfolgen, beispielsweise durch Extrusion, Spritzguss, Sinterverfahren oder aus Lösung.

Gemäß einer weiteren Ausführungsform betrifft die vorliegende Erfindung demgemäß ein Verfahren wie zuvor beschrieben, wobei der Formkörper (FK) in Schritt (b) mittels Extrusion, Spritzguss, Sinterverfahren oder aus Lösung hergestellt wird.

Das Verfahren gemäß Schritt (a) kann prinzipiell unter an sich bekannten Reaktionsbedingungen durchgeführt werden.

Gemäß einer bevorzugten Ausführungsform wird das Verfahren gemäß Schritt (a) unter gegenüber Raumtemperatur erhöhten Temperaturen durchgeführt, weiter bevorzugt im Bereich zwischen 50 °C und 200 °C, besonders bevorzugt im Bereich von 55 °C und 150 °C, insbesondere im Bereich von 60 °C und 120 °C.

Das Erwärmen kann erfindungsgemäß auf jede dem Fachmann bekannte geeignete Art erfolgen. Vorzugsweise durch elektrisches Beheizen, Beheizen über erhitztes Öl, erhitze Polymerflüssigkeiten oder Wasser, Induktionsfelder, Warmluft oder IR-Strahlung.

Die erhaltenen thermoplastischen Polyurethane werden erfindungsgemäß zu einem Formkörper (FK) verarbeitet. Das Verfahren umfasst demgemäß Schritt (a) und Schritt (b). Erfindungsgemäß kann das Verfahren weitere Schritte, beispielsweise Temperaturbehandlungen, umfassen.

Mit dem erfindungsgemäßen Verfahren wird ein Formkörper (FK) erhalten, der neben guten mechanischen Eigenschaften und einer sehr guten Weiterreißfestigkeit auch eine Glasübergangstemperatur unter 5°C, insbesondere unter 0°C aufweist, bevorzugt eine Glasübergangstemperatur unter -5°C, besonders bevorzugt unter -10°C. Gemäß einem weiteren Aspekt betrifft die vorliegende Erfindung auch Formkörper, erhältlich oder erhalten gemäß einem Verfahren wie zuvor beschrieben.

Prinzipiell kann es sich bei dem Formkörper (FK) um Körper aller möglichen Formen handeln, beispielsweise Extrusionsprodukte wie Folien und andere Formkörper, wobei es sich vorzugsweise um eine Folie, beispielsweise für Fußbodenbeläge, Skifolien, Förderbänder oder Spritzgusskörper wie Minensiebe, Brillengestelle, Rollen, Teile eines Schuhs, insbesondere eines Teils einer Schuhsohle oder einer Zehenkappe handelt.

Gemäß einer weiteren Ausführungsform betrifft die vorliegende Erfindung demgemäß einen Formkörper wie zuvor beschrieben, wobei der Formkörper eine Folie oder ein Spritzgussteil ist.

Die nachfolgenden Beispiele dienen der Veranschaulichung der Erfindung, sind aber in keiner Weise einschränkend hinsichtlich des Gegenstands der vorliegenden Erfindung.

BEISPIELE

**1 Folgende Einsatzstoffe wurden eingesetzt:**

| | |
|---|---|
| Polyol 1: | Polyesterpolyol auf Basis Adipinsäure, 1,4-Butandiol und 1,6 Hexandiol mit einer OH-Zahl von 56, Funktionalität: 2 |
| Polyol 2: | Polyesterpolyol auf Basis Adipinsäure, Ethylenglykol und Diethylenglykol mit einer OH-Zahl von 56, Funktionalität: 2 |
| Polyol 3: | Polyesterpolyol auf Basis Adipinsäure, Ethylenglykol und 1,4-Butandiol mit einer OH-Zahl von 56, Funktionalität: 2 |
| Polyol 4: | Polyesterpolyol auf Basis Adipinsäure, PET, 1,4-Butandiol und 1,6 Hexandiol mit einer OH-Zahl von |

54,4, Funktionalität: 2

Polyol 5: Polyesterpolyol auf Basis Adipinsäure, PET, Diethylenglykol mit einer OH-Zahl von 50, Funktionalität: 2

Polyol 6: Polyesterpolyol auf Basis Adipinsäure, PET, 1,4-Butandiol mit einer OH-Zahl von 49,4, Funktionalität: 2

PET Polyethylenterephthalat in Form von Flocken mit einem mittleren Molekulargewicht Mw von 12000 g/mol

Isocyanat 1: 4,4' Methylendiphenyldiisocyanat

Isocyanat 2: 1,6 Hexamethylendiisocyanat

KV 1: 1,4- Butandiol

KV 2: 1,6-Hexandiol

Katalysator 1: Bismutkatalysator

Stabilisator 1: Hydrolysestabilisator auf der Basis von Polycarbodiimid

Stabilisator 2: sterisch gehindertes Amin 1

Stabilisator 3: sterisch gehindertes Phenol

Stabilisator 4: sterisch gehindertes Amin 2

Additiv 1: Weichmacher auf Basis eines Carbonsäureesters

## 2 Synthese der Polyester Polyole mit PET Blöcken

2.1 Synthese von Polyol 4

Einem 4000 ml Rundhalskolben versehen mit Thermoelement PT100, Stickstoffeinleitung, Rührer, Kolonne, Kolonnenkopf, Anschütz-Thiele-Aufsatz und Heizpilz werden zunächst 1111,26 g Adipinsäure, 406,69 g Butandiol 1,4 (3% Überschuss) und 533,32g Hexandiol 1,6 (3% Überschuss) zugefügt. Das Gemisch wird anschließend auf 120 °C erhitzt bis eine homogene Mischung entsteht. Zum Gemisch werden nun 750 g Polyethylenterephthalat (PET) in Form von Flocken und anschließend 10ppm=2,5g TTB (Tetra-n-butylorthotitant 1%-ig in Toluol) hinzugegeben. Die Reaktionsmischung wird zunächst für ca.1,5 Std. auf 180°C und danach weiter auf 240 °C erhitzt und das entstehende Reaktionswasser wird kontinuierlich entfernt. Während der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.

Das erhaltene Polymer weist folgende Eigenschaften auf

Hydroxylzahl: 54,4 mg KOH/g

Säurezahl: 0,48 mg KOH/g

Viskosität bei 75 °C: 2024 mPas

2.2 Synthese von Polyol 5

Einem 4000 ml Rundhalskolben versehen mit Thermoelement PT100, Stickstoffeinleitung, Rührer, Kolonne, Kolonnenkopf, Anschütz-Thiele-Aufsatz und Heizpilz werden zunächst 1099,59 g Adipinsäure und 921,43g Diethylenglykol (ohne Überschuss) zugefügt. Das Gemisch wird anschließend auf 120 °C erhitzt bis eine homogene Mischung entsteht. Zum Gemisch werden nun 750 g Polyethylenterephthalat (PET) in Form von Flocken und anschließend 10ppm=2,5g TTB (Tetra-n-butylorthotitant 1%-ig in Toluol) hinzugegeben. Die Reaktionsmischung wird zunächst für ca.1,5 Std. auf 180°C und danach weiter auf 240 °C erhitzt und das entstehende Reaktionswasser wird kontinuierlich entfernt. Während der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.

Das erhaltene Polymer weist folgende Eigenschaften auf

Hydroxylzahl: 50 mg KOH/g

Säurezahl: 0,38 mg KOH/g

Viskosität bei 75 °C: 1936 mPas

2.3 Synthese von Polyol 6

Einem 4000 ml Rundhalskolben versehen mit Thermoelement PT100, Stickstoffeinleitung, Rührer, Kolonne, Kolonnenkopf, Anschütz-Thiele-Aufsatz und Heizpilz werden zunächst 1200,99 g Adipinsäure und 870,38 g Butandiol 1,4 (3% Überschuss) zugefügt. Das Gemisch wird anschließend auf 120 °C erhitzt bis eine homogene Mischung entsteht. Zum Gemisch werden nun 750 g Polyethylenterephthalat (PET) in Form von Flocken und anschließend 10ppm=2,5g TTB (Tetra-n-butylorthotitant 1%-ig in Toluol) hinzugegeben. Die Reaktionsmischung wird zunächst für ca.1,5 Std. auf 180°C und danach weiter auf 240 °C erhitzt und das entstehende Reaktionswasser wird kontinuierlich entfernt. Während der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird

Das erhaltene Polymer weist folgende Eigenschaften auf

Hydroxylzahl: 49,4 mg KOH/g
Säurezahl: 0,6 mg KOH/g
Viskosität bei 75 °C: 4423 mPas

## 3 **Methoden**

### 3.1 Viskositätsbestimmung:

Die Viskosität der Polyole wurde, wenn nicht anders angegeben, bei 75 °C gemäß DIN EN ISO 3219 (Ausgabe 01.10.1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt.

### 3.2 Messung der Hydroxylzahl:

Die Hydroxylzahlen wurden nach der Phthalsäureanhydrid-Methode DIN 53240 (. Ausgabe: 01.12.1971) bestimmt und in mg KOH/g angegeben.

### 3.3 Messung der Säurezahl:

Die Säurezahl wurde nach DIN EN 1241 (Ausgabe: 01.05.1998) bestimmt und ist in mg KOH/g angegeben.

## 4 **Allgemeines Herstellbeispiel**

Die Polyole wurden bei 60 bis 80 °C in einem Behälter vorgelegt und mit den Komponenten gemäß Tabelle 1 bzw. 2 unter starkem Rühren vermischt. Die Reaktionsmischung erhitzte sich auf über 100 °C und wurde dann auf einen beheizten, teflonbeschichteten Tisch ausgegossen. Die erhaltene Gießschwarte wurde 15 Stunden bei 80 °C getempert, anschließend granuliert und im Spritzguss verarbeitet.

Tabelle 1: Eingesetzte Vergleichsverbindungen

| | Vergleich 1 | Vergleich 2 | Vergleich 3 | Vergleich 4 |
|---|---|---|---|---|
| Polyol 1 [g] | 940 | | | |
| Polyol 2 [g] | | 950 | | 1100 |
| Polyol 3 [g] | | | 800,0 | |
| KV 1 [g] | 115,5 | 116,7 | 100,9 | |
| KV 2 [g] | | | | 123 |
| Isocyanat 1 [g] | 440,7 | 446,4 | 384 | |
| Isocyanat 2 [g] | | | | 270,3 |
| Katalysator 1 [$\mu$l] | | | | 600 |
| Stabilisator 1 [g] | 3,8 | 7,6 | 6,4 | 8,8 |
| Stabilisator 2 [g] | | | | 4,6 |
| Stabilisator 3 [g] | | | | 7,6 |
| Stabilisator 4 [g] | | | | 3 |
| Additiv 1 [g] | | 80 | | |
| | | | | |
| Kennzahl | 1000 | 1000 | 1000 | 1000 |
| Hartsegmentgehalt | 29,2 % | 29,2 % | 29,7 % | 20 % |

(fortgesetzt)

|  | Vergleich 1 | Vergleich 2 | Vergleich 3 | Vergleich 4 |
|---|---|---|---|---|
| Starttemperatur | 80 °C | 80 °C | 80 °C | 80 °C |
| Abgusstemperatur | 110 °C | 110 °C | 110 °C | 110 °C |

Tabelle 2: Eingesetzte Beispielverbindungen

|  | Beispiel 1 | Beispiel 2 | Beispiel 3 | Beispiel 4 |
|---|---|---|---|---|
| Polyol 4 [g] | 720 |  |  |  |
| Polyol 5 [g] |  | 950 |  | 1100 |
| Polyol 6 [g] |  |  | 850 |  |
| KV 1 [g] | 88,2 | 115,9 | 103,1 |  |
| KV 2 [g] |  |  |  | 122,4 |
| Isocyanat 1 [g] | 335,7 | 436,7 | 384 |  |
| Isocyanat 2 [g] |  |  |  | 263,7 |
| Stabilisator 1 [g] | 7,2 | 7,6 | 8,5 | 8,8 |
| Stabilisator 2 [g] |  |  |  | 4,5 |
| Stabilisator 3 [g] |  |  |  | 7,6 |
| Stabilisator 4 [g] |  |  |  | 3 |
| Additiv 1 [g] |  | 79,5 |  |  |
| Kennzahl | 1000 | 1000 | 1000 | 1000 |
| Hartsegmentgehalt | 29,2 % | 29,2 % | 29,2 % | 20 % |
| Starttemperatur | 60 °C | 80 °C | 60 °C | 80 °C |
| Abgusstemperatur | 100 °C | 110 °C | 100 °C | 110 °C |

## 5 Mechanische Eigenschaften

Die in den folgenden Tabellen zusammengestellten Messwerte wurden von Spritzgussplatten der Vergleiche 1 bis 4 und der Beispiele 1 bis 4 erstellt.

Die folgenden Eigenschaften der erhaltenen Polyurethane wurden nach den genannten Verfahren bestimmt:

| | |
|---|---|
| Härte: | DIN ISO 7619-1 |
| Zugfestigkeit und Reißdehnung: | DIN 53504 |
| Weiterreißwiderstand : | DIN ISO 34-1, B (b) |
| Abriebmessung: | DIN ISO 4649 |
| Dynamisch-Mechanisch-Thermische-Analyse: | DIN EN ISO 6721 |

Die Tg-Werte beziehen sich auf DMTA-Messungen und wurden dabei aus dem G"-Modul abgelesen.

Tabelle 3: Mechanische Eigenschaften aromatischer TPU mit Polyestern höheren Molekulargewichts.

|  | Shore Härte | Zugfestigkeit [MPa] | Weiterreißfestigkeit [kN/m] | Abrieb [mm$^3$] | Tg (DMA, G") [°C] |
|---|---|---|---|---|---|
| Vergleich 1 | 88 A | 47 | 78 | 43 |  |
| Beispiel 1 | 89 A | 48 | 110 | 32 | -15 |
|  |  |  |  |  |  |

EP 3 559 072 B1

(fortgesetzt)

|  | Shore Härte | Zugfestigkeit [MPa] | Weiterreißfestigkeit [kN/m] | Abrieb [mm$^3$] | Tg (DMA, G") [°C] |
|---|---|---|---|---|---|
| Vergleich 2 | 85 A | 41 | 73 | 78 |  |
| Beispiel 2 | 87 A | 54 | 96 | 49 | -10 |
|  |  |  |  |  |  |
| Vergleich 3 | 86 A | 45 | 81 | 36 |  |
| Beispiel 3 | 88 A | 50 | 115 | 33 | -10 |

Tabelle 4: Mechanische Eigenschaften aliphatischer TPU

|  | Shore Härte | Zugfestigkeit [MPa] | Weitereißfestigkeit [kN/m] | Abrieb [mm$^3$] | Tg (DMA, G") [°C] |
|---|---|---|---|---|---|
| Vergleich 4 | 83 A | 18 | 39 | 197 |  |
| Beispiel 4 | 86 A | 22 | 71 | 60 | -20 |

**Zitierte Literatur**

US 5496496

US 4062825

US 4202950

EP 2 687 552 A1

Kunststoffhandbuch, Band 7, "Polyurethane", Carl Hanser Verlag, 3. Auflage 1993, Kapitel 3.1 Kunststoffhandbuch, Band 7, Carl Hanser Verlag, 1. Auflage 1966, S. 103-113

**Patentansprüche**

1. Thermoplastisches Polyurethan, erhältlich oder erhalten durch Umsetzung von mindestens den Komponenten (i) bis (iii):

   (i) mindestens einer Polyisocyanatzusammensetzung,
   (ii) mindestens eines Kettenverlängerers, und
   (iii) mindestens einer Polyolzusammensetzung,

   wobei die Polyolzusammensetzung ein Polyol (P1) umfasst, das ein Molekulargewicht Mw im Bereich von 1500 bis 2500 g/Mol aufweist und mindestens einen aromatischen Polyester-Block (B1) aufweist.

2. Thermoplastisches Polyurethan gemäß Anspruch 1, wobei das Polyol (P1) 10 bis 50 Gew.-% der aromatischen Polyester-Blöcke (B1) aufweist, bezogen auf das gesamte Polyesterpolyol (P1).

3. Thermoplastisches Polyurethan gemäß Anspruch 1 oder 2, wobei der aromatische Polyester-Block (B1) ein Polyester aus einer aromatischen Dicarbonsäure und einem aliphatischen Diol ist.

4. Thermoplastisches Polyurethan gemäß einem der Ansprüche 1 bis 3, wobei der aromatische Polyester-Block (B1) ein Polyethylenterephthalat-Block oder ein Polybutylenterephthalat-Block ist.

5. Thermoplastisches Polyurethan gemäß einem der Ansprüche 1 bis 4, wobei der aromatische Polyester-Block (B1)

11

ein Polyethylenterephthalat-Block ist.

**6.** Thermoplastisches Polyurethan gemäß einem der Ansprüche 1 bis 5, wobei das Polyol (P1) ein Molekulargewicht Mw im Bereich von 1700 bis 2300 g/Mol aufweist.

**7.** Thermoplastisches Polyurethan gemäß einem der Ansprüche 1 bis 6, wobei der gemäß (ii) eingesetzte Kettenverlängerer ein Diol mit einem Molekulargewicht Mw < 220 g/mol ist.

**8.** Thermoplastisches Polyurethan gemäß einem der Ansprüche 1 bis 7, wobei der gemäß (ii) eingesetzte Kettenverlängerer und das in der Polyolzusammensetzung enthaltene Polyol (P1) in einem molaren Verhältnis von 40 zu 1 bis 1 zu 10 eingesetzt werden.

**9.** Thermoplastisches Polyurethan gemäß einem der Ansprüche 1 bis 8, wobei die Polyolzusammensetzung ein weiteres Polyol ausgewählt aus der Gruppe bestehend aus Polyetherolen, Polyesterolen, Polycarbonatalkoholen und Hybridpolyolen umfasst.

**10.** Thermoplastisches Polyurethan gemäß einem der Ansprüche 1 bis 9, wobei das Polyisocyanat ein aliphatisches oder aromatisches Diisocyanat ist.

**11.** Verfahren zur Herstellung eines Formkörpers (FK) umfassend die folgenden Schritte:

(a) Herstellung eines thermoplastischen Polyurethans umfassend die Umsetzung

(i) mindestens einer Polyisocyanatzusammensetzung,
(ii) mindestens eines Kettenverlängerers, und
(iii) mindestens einer Polyolzusammensetzung,

wobei die Polyolzusammensetzung ein Polyol (P1) umfasst, das ein Molekulargewicht Mw im Bereich von 1500 bis 2500 g/Mol aufweist und mindestens einen aromatischen Polyester-Block (B1) aufweist;
(b) Herstellung eines Formkörpers (FK) aus dem thermoplastischen Polyurethan.

**12.** Verfahren gemäß Anspruch 11, wobei der Formkörper (FK) in Schritt (b) mittels Extrusion, Spritzguss, Sinterverfahren oder aus Lösung hergestellt wird.

**13.** Formkörper, erhältlich oder erhalten gemäß einem Verfahren gemäß einem der Ansprüche 11 oder 12.

**14.** Formkörper gemäß Anspruch 13, wobei der Formkörper eine Folie oder ein Spritzgussteil ist.


**Claims**

**1.** A thermoplastic polyurethane obtainable or obtained by reacting at least components (i) to (iii):

(i) at least one polyisocyanate composition,
(ii) at least one chain extender, and
(iii) at least one polyol composition,

wherein the polyol composition comprises a polyol (P1) which has a molecular weight Mw in the range from 1500 to 2500 g/mol and has at least one aromatic polyester block (B1).

**2.** The thermoplastic polyurethane according to claim 1, wherein the polyol (P1) includes 10% to 50% by weight of the aromatic polyester blocks (B1), based on the overall polyester polyol (P1).

**3.** The thermoplastic polyurethane according to claim 1 or 2, wherein the aromatic polyester block (B1) is a polyester of an aromatic dicarboxylic acid and an aliphatic diol.

**4.** The thermoplastic polyurethane according to any of claims 1 to 3, wherein the aromatic polyester block (B1) is a polyethylene terephthalate block or a polybutylene terephthalate block.

5. The thermoplastic polyurethane according to any of claims 1 to 4, wherein the aromatic polyester block (B1) is a polyethylene terephthalate block.

6. The thermoplastic polyurethane according to any of claims 1 to 5, wherein the polyol (P1) has a molecular weight Mw in the range from 1700 to 2300 g/mol.

7. The thermoplastic polyurethane according to any of claims 1 to 6, wherein the chain extender used in (ii) is a diol having a molecular weight Mw < 220 g/mol.

8. The thermoplastic polyurethane according to any of claims 1 to 7, wherein the chain extender used in (ii) and the polyol (P1) present in the polyol composition are used in a molar ratio of 40:1 to 1:10.

9. The thermoplastic polyurethane according to any of claims 1 to 8, wherein the polyol composition comprises a further polyol selected from the group consisting of polyetherols, polyesterols, polycarbonate alcohols and hybrid polyols.

10. The thermoplastic polyurethane according to any of claims 1 to 9, wherein the polyisocyanate is an aliphatic or aromatic diisocyanate.

11. A process for producing a shaped body (SC) comprising the following steps:

   (a) preparing a thermoplastic polyurethane comprising the re action of

      (i) at least one polyisocyanate composition,
      (ii) at least one chain extender, and
      (iii) at least one polyol composition,

   wherein the polyol composition comprises a polyol (P1) which has a molecular weight Mw in the range from 1500 to 2500 g/mol and has at least one aromatic polyester block (B1);
   (b) producing a shaped body (SC) from the thermoplastic poly urethane.

12. The process according to claim 11, wherein the shaped body (SC) is produced in step (b) by means of extrusion, injection molding or sintering methods or from solution.

13. A shaped body obtainable or obtained by a process according to either of claims 11 and 12.

14. The shaped body according to claim 13, wherein the shaped body is a foil or an injection molding.

**Revendications**

1. Polyuréthane thermoplastique, pouvant être obtenu ou obtenu par transformation au moins des composants (i) à (iii) :

   (i) au moins une composition de polyisocyanate,
   (ii) au moins un extenseur de chaînes, et
   (iii) au moins une composition de polyol,

   la composition de polyol comprenant un polyol (P1) qui présente un poids moléculaire Mw dans la plage de 1 500 à 2 500 g/mole et au moins un bloc (B1) de polyester aromatique.

2. Polyuréthane thermoplastique selon la revendication 1, le polyol (P1) présentant 10 à 50 % en poids des blocs (B1) de polyester aromatique, par rapport au polyesterpolyol (P1) total.

3. Polyuréthane thermoplastique selon la revendication 1 ou 2, le bloc (B1) de polyester aromatique étant un polyester issu d'un acide dicarboxylique aromatique et d'un diol aliphatique.

4. Polyuréthane thermoplastique selon l'une quelconque des revendications 1 à 3, le bloc (B1) de polyester aromatique étant un bloc de poly(téréphtalate d'éthylène) ou un bloc de poly(téréphtalate de butylène).

**5.** Polyuréthane thermoplastique selon l'une quelconque des revendications 1 à 4, le bloc (B1) de polyester aromatique étant un bloc de poly(téréphtalate d'éthylène) .

**6.** Polyuréthane thermoplastique selon l'une quelconque des revendications 1 à 5, le polyol (P1) présentant un poids moléculaire Mw dans la plage de 1 700 à 2 300 g/mole.

**7.** Polyuréthane thermoplastique selon l'une quelconque des revendications 1 à 6, l'extenseur de chaînes utilisé selon (ii) étant un diol doté d'un poids moléculaire Mw < 220 g/mole.

**8.** Polyuréthane thermoplastique selon l'une quelconque des revendications 1 à 7, l'extenseur de chaînes utilisé selon (ii) et le polyol (P1) contenu dans la composition de polyol étant utilisés en un rapport molaire de 40 sur 1 à 1 sur 10.

**9.** Polyuréthane thermoplastique selon l'une quelconque des revendications 1 à 8, la composition de polyol comprenant un autre polyol choisi dans le groupe constitué par des polyétherols, des polyesterols, des polycarbonatealcools et des polyols hybrides.

**10.** Polyuréthane thermoplastique selon l'une quelconque des revendications 1 à 9, le polyisocyanate étant un diisocyanate aliphatique ou aromatique.

**11.** Procédé pour la préparation d'un corps moulé (FK) comprenant les étapes suivantes :

(a) préparation d'un polyuréthane thermoplastique comprenant la transformation

(i) d'au moins une composition de polyisocyanate,
(ii) d'au moins un extenseur de chaînes, et
(iii) d'au moins une composition de polyol, la composition de polyol comprenant un polyol (P1) qui présente un poids moléculaire Mw dans la plage de 1 500 à 2 500 g/mole et présente au moins un bloc (B1) de polyester aromatique ;

(b) préparation d'un corps moulé (FK) à partir du polyuréthane thermoplastique.

**12.** Procédé selon la revendication 11, le corps moulé (FK) dans l'étape (b) étant préparé au moyen d'une extrusion, d'un moulage par injection, d'un procédé de frittage ou à partir d'une solution.

**13.** Corps moulé, pouvant être obtenu ou obtenu selon un procédé selon l'une quelconque des revendications 11 et 12.

**14.** Corps moulé selon la revendication 13, le corps moulé étant une feuille ou une pièce moulée par injection.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5496496 A
- US 4062825 A
- US 4202950 A
- EP 2687552 A1
- US 4186257 A
- EP 1529814 A2
- EP 1556433 A1

**In der Beschreibung aufgeführte Nicht-Patentliteratur**

- Kunststoffhandbuch, Band 7, Polyurethane. Carl Hanser Verlag, 1993, vol. 7
- Kunststoffhandbuch. Carl Hanser Verlag, 1966, vol. VII, 103-113
- Kunststoffhandbuch. Carl Hanser Verlag, 1993, vol. 7
- Kunststoffhandbuch. Carl Hanser Verlag, 1966, vol. 7, 103-113